# EUROPEAN PATENT APPLICATION

(11) **EP 4 527 861 A1**
(43) Date of publication of application: **26.03.2025**
(21) Application number: 22942334.8
(22) Date of filing: 04.08.2022
(51) Int. Cl.: C08F 220/06, C08F 220/56, C08F 226/00, C08F 212/36, C09K 8/12

(54) **FLOW PATTERN REGULATOR FOR WATER-BASED DRILLING FLUID, AND PREPARATION METHOD THEREFOR**

(30) Priority: 19.05.2022 CN 202210544973
(71) Applicant: China Oilfield Services Ltd., Tianjin 300459 (CN)
(72) Inventor: WANG, Chaoqun, Tianjin 300459 (CN); CHEN, Yuanbo, Tianjin 300459 (CN); XIA, Xiaochun, Tianjin 300459 (CN); LI, Zili, Tianjin 300459 (CN); HU, Yueyue, Tianjin 300459 (CN); WANG, Zhiyong, Tianjin 300459 (CN); ZHANG, Yufei, Tianjin 300459 (CN); ZHANG, Peng, Tianjin 300459 (CN); CHEN, Qiang, Tianjin 300459 (CN); XIANG, Xiong, Tianjin 300459 (CN)
(74) Representative: RGTH
(86) International application number: PCT/CN2022/110315
(87) International publication number: WO 2023/221303

(57) **Abstract**

The present application provides a rheology modifier for a water-based drilling fluid, which is prepared by polymerization reaction of raw materials including: a first monomer 10%-40%, a second monomer 40%-70%, a third monomer 10%-40%, and a fourth monomer 0.5%-3%, wherein the first monomer is acrylamide, the second monomer is acrylic acid or sodium 2-acrylamido-2-methylpropane sulfonate, the third monomer is N-vinylpyrrolidone, and the fourth monomer is one selected from the group consisting of sodium undecenate, 1-undecenamide, octadecyl dimethyl allyl ammonium chloride, 2-acrylamido hexadecyl sulfonic acid, and divinylbenzene. The present application also provides a method for preparing the rheology modifier for the water-based drilling fluid, including preparing a reaction system, conducting polymerization reaction, drying, and pulverizing. The rheology modifier for the water-based drilling fluid according to the present application has advantages of high-temperature-resistance and salt-resistance.

## Description

### Cross reference of relevant applications

This application claims the priority of the Chinese patent application Chinese Patent Application No. 202210544973.6.1, titled "Rheology modifier for water-based drilling fluid and preparation method thereof", and filed with China National Intellectual Property Administration on May 19, 2022, the disclosure of which is incorporated by reference herein in its entirety as part of the present application.

### Technical field

The present application relates to the field of petroleum exploitation technology, in particular to a rheology modifier for a water-based drilling fluid and a preparation method thereof.

### Background

With the deepening of oil and gas exploration and development, drilling operations will face higher temperature, higher salinity reservoirs, and more complex situations. Solid-free water-based drilling fluid is a system applied under drilling conditions in reservoir sections, and has a core composition of a tackifier, a shearing-improvement agent, and other organic polymer treatment agents. However, under high temperature conditions, especially when the temperature is higher than 200°C, the stability of these organic treatment agents significantly decreases, and even fails, leading to the instability of the rheological performance of the system, which will have a serious adverse impact on the safety and efficiency of drilling fluid operations. In order to address such issues, domestic and foreign scholars have conducted some research. However, the rheology modifiers from the current research and development have insufficient high-temperature-resistance and could not be used in saline systems above 200°C.

### Summary of the application

In order to solve all or part of the above problems, the present application aims to provide a rheology modifier for a water-based drilling fluid and a preparation method thereof.

On the one hand, the present application provides a rheology modifier for a water-based drilling fluid, which is prepared by polymerization reaction of raw materials including, 10 wt%-40 wt% of a first monomer, 40 wt%-70 wt% of a second monomer, 10 wt%-40 wt% of a third monomer, and 0.5 wt%-3 wt% of a fourth monomer, wherein the first monomer is any selected from the group consisting of acrylamide, methylacrylamide, N-ethyl acrylamide, and N,N-dimethylacrylamide; the second monomer is any selected from the group consisting of acrylic acid, methacrylic acid, sodium 2-acrylamido-2-methylpropane sulfonate, vinylsulfonic acid, and p-vinylbenzene sulfonic acid; the third monomer is any selected from the group consisting of N-vinylpyrrolidone, N-vinylcaprolactam, and vinylacetic acid; and the fourth monomer is any selected from the group consisting of octadecyl dimethyl allyl ammonium chloride, tetradecyl dimethyl allyl ammonium chloride, dodecyl dimethyl allyl ammonium chloride, tetradecyl methacrylate, hexadecyl methacrylate, octadecyl methacrylate, divinylbenzene, 2-acrylamido tetradecyl sulfonic acid, 2-acrylamido hexadecyl sulfonic acid, 2-acrylamido octadecyl sulfonic acid, dodecyl vinyl ether, hexadecyl vinyl ether, vinyl triethoxysilane, vinyl triisopropoxysilane, 1-undecenamide, sodium undecylenate, and 1-undecenoic acid.

Optionally, the first monomer is acrylamide.

Optionally, the second monomer is acrylic acid or sodium 2-acrylamido-2-methylpropane sulfonate.

Optionally, the third monomer is N-vinylpyrrolidone.

Optionally, the fourth monomer is any selected from the group consisting of sodium undecylenate, 1-undecenamide, octadecyl dimethyl allyl ammonium chloride, 2-acrylamido hexadecyl sulfonic acid, and divinylbenzene.

On the other hand, the present application provides a method for preparing the rheology modifier for the water-based drilling fluid as described above, including
(1) adding deionized water to a reaction vessel, adding the first monomer and the second monomer in sequence thereto, adjusting a pH value of a resulting mixture to 7-8, and then adding the third monomer and the fourth monomer in sequence thereto, to obtain a reaction system;
(2) raising a temperature of the reaction system, introducing nitrogen gas into the reaction vessel, then adding an initiator to the reaction system, and subjecting a resulting mixture to reaction, to obtain a jelly; and
(3) drying and pulverizing the jelly.

Optionally, in step (1), a sum of masses of the first monomer, the second monomer, the third monomer, and the fourth monomer accounts for 17% to 25% of a mass of the reaction system.

Optionally, in step (2), the temperature of the reaction system is raised to 30-40 °C, nitrogen gas is introduced into the reaction vessel, and the initiator is then added to the reaction system.

Optionally, in step (2), the initiator is an azo initiator, preferably 2,2'-azobis[2-(2-imidazolin-2-yl)propane] dihydrochloride, or 2,2'-azobis(2-methylpropionamidine) dihydrochloride.

Optionally, in step (2), the initiator is added in an amount of 0.05% to 0.3% of the sum of the masses of the first monomer, the second monomer, the third monomer, and the fourth monomer.

From the above technical solutions, the rheology modifier for a water-based drilling fluid and a preparation method thereof according to the present application have the following advantages:

In the present application, a certain number of hydrophobic chain segments are introduced into the molecular structure of the final modifier by selecting monomers, which forms a certain degree of non-covalent forces between molecules, thereby enabling the modifier to maintain the overall stability of the molecular chain under high temperature and salinity conditions.

As demonstrated in experiments, the rheology modifier for the water-based drilling fluid of the present application could regulate the rheological properties of the system at 210°C in 1.3 g/cm³ aqueous potassium formate salt solution.

### Brief Description of the Drawings

Fig. 1 shows non-covalent forces formed between molecules of the rheology modifier for the water-based drilling fluid according to an embodiment of the present application.
Fig. 2 shows a flowchart of the method for preparing the rheology modifier for the water-based drilling fluid according to an embodiment of the present application.
Fig. 3 shows infrared spectrum of the high-temperature-resistant and salt-resistant polymer obtained from Example 2 of the present application.
Fig. 4 shows a scanning electron microscope (SEM) image of the high-temperature-resistant and salt-resistant polymer obtained from Example 2 of the present application.
Fig. 5 shows a dynamic rheological curve of the high-temperature-resistant and salt-resistant polymer obtained from Example 2 of the present application at 120 °C-180 °C.

### Detailed Description of the Preferred Embodiment

In order to fully understand the object, features, and efficacy of the present application, a detailed description is provided below through the following specific embodiments. Unless otherwise specified, the technical terms involved in the present application have the meanings commonly understood by those skilled in the art.

With the deepening of oil and gas exploration and development, the application of solid-free water-based drilling fluids in high temperature and high salinity conditions is gradually increasing. However, the existing rheology modifiers for water-based drilling fluids could not be used at a temperature greater than 200 °C and salinity greater than 1.3 g/cm³, which therefore do not meet production needs.

To address this issue, inventors of the present application have found through in-depth research that the high-temperature stability of polymer molecules is mainly reflected in whether their molecular structure could maintain a relatively stretchy structure at high temperatures, in order to ensure their effectiveness. In order to enable rheology modifiers to be used under high temperature and high salinity conditions, the inventors of the present application screened specific monomers and designed the polymer molecular structure to increase intermolecular forces of the polymer, thereby suppressing or reducing the influence of polymer molecules' curling on the rheological properties of the polymer solution under high temperature and high salinity conditions.

It should be noted that, in the present application, "rheology modifier for a water-based drilling fluid", "rheology modifier", "high-temperature-resistant and salt-resistant polymer", etc. have the same meaning and can be interchangeably used.

Based on the research of the inventors, the present application provides a rheology modifier for a water-based drilling fluid, which is prepared by polymerization reaction of raw materials including, 10 wt%-40 wt% of a first monomer, 40 wt%-70 wt% of a second monomer, 10 wt%-40 wt% of a third monomer, and 0.5 wt%-3 wt% of a fourth monomer.

The first monomer is any one of acrylamide, methylacrylamide, N-ethyl acrylamide, and N,N-dimethylacrylamide. Preferably, the first monomer is acrylamide.

In various embodiments, the raw materials include 10 wt% to 20 wt%, 15 wt% to 25 wt%, 20 wt% to 30 wt%, 25 wt% to 35 wt%, or 30 wt% to 40 wt% of the first monomer.

In the present application, the main function of the first monomer is to ensure the distribution of small molecules of amide monomers throughout the entire polymer structure. On the one hand, it could improve the molecular weight of the polymer, and on the other hand, it could improve the reactivity ratio of various monomers, thereby achieving effective graft copolymerization of various functional monomers.

The second monomer is any one of acrylic acid, methacrylic acid, sodium 2-acrylamido-2-methylpropane sulfonate, vinylsulfonic acid, and p-vinylbenzene sulfonic acid. Preferably, the second monomer is acrylic acid or sodium 2-acrylamido-2-methylpropane sulfonate.

In various embodiments, the raw materials include 40 wt% to 50 wt%, 45 wt% to 55 wt%, 50 wt% to 60 wt%, 55 wt% to 65 wt%, or 60 wt% to 70 wt% of the second monomer.

In the present application, the main function of the second monomer is to improve the high-temperature-resistance of polymer molecules. The use of AMPS monomer or AMPS-Na as an acrylamide derivative to improve the thermal stability of the copolymer is a common means, but concentration/grafting ratio thereof was discovered by the inventors of the present application through extensive experimental research. Therefore, the second monomer is required to be controlled at a certain concentration to achieve thermal stability.

The third monomer is any one of N-vinyl pyrrolidone, N-vinylcaprolactam, and vinylacetic acid. Preferably, the third monomer is N-vinylpyrrolidone.

In various embodiments, the raw materials include 10 wt%-20 wt%, 15 wt%-25 wt%, 20 wt%-30 wt%, 25 wt%-35 wt%, or 30 wt%-40 wt% of the third monomer.

In the present application, the main function of the third monomer is to inhibit the hydrolysis of amide groups. At high temperatures, the hydrolysis of amide(s) would lead to partial structural instability of the polymer, and the failures of many functional monomers are due to the hydrolysis of amide(s). Therefore, the main function of the third monomer is to control the hydrolysis of amide(s).

The fourth monomer is any one of octadecyl dimethyl allyl ammonium chloride, tetradecyl dimethyl allyl ammonium chloride, dodecyl dimethyl allyl ammonium chloride, tetradecyl methacrylate, hexadecyl methacrylate, octadecyl methacrylate, divinylbenzene, 2-acrylamido tetradecyl sulfonic acid, 2-acrylamido hexadecyl sulfonic acid, 2-acrylamido octadecyl sulfonic acid, dodecyl vinyl ether, hexadecyl vinyl ether, vinyl triethoxysilane, vinyl triisopropoxysilane, 1-undecenamide, sodium undecylenate, and 1-undecenoic acid.

Preferably, the fourth monomer is any one of sodium undecylenate, 1-undecenamide, octadecyl dimethyl allyl ammonium chloride, 2-acrylamido hexadecyl sulfonic acid, and divinylbenzene.

In various embodiments, the raw materials include 0.5 wt%, 1.0 wt%, 1.5 wt%, 2 wt%, 2.5 wt%, or 3.0 wt% of the fourth monomer.

In the present application, the main function of the fourth monomer is to provide part of hydrophobic segments, so that when the polymer molecules curl up, the contact degree of hydrophobic groups on the molecular chain increases, and the entanglement and aggregation between the hydrophobic segments form intermolecular forces, thus forming a cross-linking like effect, but a weak cross-linking effect. In this way, a partially detachable network structure is formed, which on the one hand controls a further curling of polymer molecular chains, and on the other hand, the formation of this body structure increases viscosity of solution, which could kinetically reduce the hydration and decomposition of functional groups in the molecular chain.

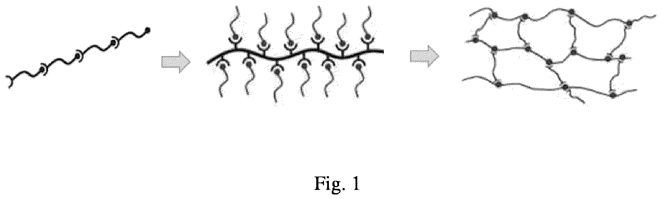

It should be noted that, since the characteristic structure of polymer varies with the composition ratio, the present application focuses not only on the selection of functional monomers, but also the control of proportions of various monomers, which also plays an important role in performance of the final polymer. When various monomers in the above proportions are used as raw materials to prepare a rheology modifier for a water-based drilling fluid through polymerization reaction, a certain number of hydrophobic chain segments are introduced in the molecular structure of the resulting polymer, and therefore a certain degree of non-covalent forces are formed between molecules, forming a structure as shown in Fig. 1. In view of the above, the resulting polymer could maintain the overall stability of the molecular chain at high temperature and salinity conditions.

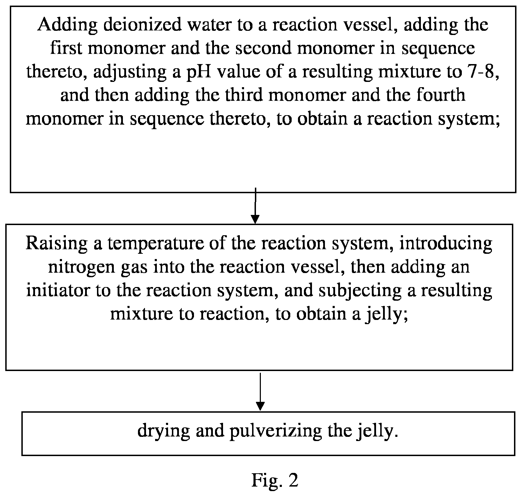

The present application also provides a method for preparing the rheology modifier for the water-based drilling fluid, as shown in Fig. 2. The method includes steps (1) to (3).
(1) adding deionized water to a reaction vessel, adding the first monomer and the second monomer in sequence thereto, adjusting a pH value of a resulting mixture to 7-8, and then adding the third monomer and the fourth monomer in sequence thereto, to obtain a reaction system.
   In some specific embodiments, firstly, the first monomer, the second monomer, the third monomer, and the fourth monomer are prepared in proportion. The first monomer and deionized water are added to the reaction vessel, and the first monomer is dissolved by stirring; the second monomer is added to the reaction vessel; after dissolution of the second monomer, a pH value of the resulting solution is adjusted to neutral (i.e., pH being 7-8); the third monomer and the fourth monomer are added in sequence thereto and stirring is performed until they are dissolved; and deionized water is supplemented to the reaction vessel such that the sum of masses of the first monomer, the second monomer, the third monomer, and the fourth monomer accounts for 17% to 25% (i.e., total mass concentration of various monomers) of the mass of the reaction system, to obtain a reaction system.
(2) raising a temperature of the reaction system, introducing nitrogen gas into the reaction vessel, then adding an initiator to the reaction system, and subjecting a resulting mixture to reaction, to obtain a jelly.

In some specific embodiments, the temperature of the reaction system is raised to 30°C-40 °C, and nitrogen gas is then introduced into the reaction vessel, for example, for 30 minutes; an initiator is then added to the reaction vessel; and after the initiator is completely dissolved, the polymerization reaction is carried out at 30°C-40°C for 6-10 hours, to obtain a jelly.

In some embodiments of the present application, the initiator is an azo initiator, preferably 2,2'-azobis[2-(2-imidazolin-2-yl)propane] dihydrochloride or 2,2'-azobis(2-methylpropionamidine) dihydrochloride. In some embodiments, the initiator is added in an amount of 0.05% to 0.3% of the total mass of the monomers.
(3) drying and pulverizing the jelly.

In some specific embodiments, the jelly is taken from the reaction vessel, placed in an oven and dried, for example, placed in an oven at 100 °C and dried for 10 hours; a dried product is pulverized, to obtain the rheology modifier for the water-based drilling fluid of the present application.

### Example

The present application is further explained through examples, but it is not limited to the scope of the examples. The experimental methods without specific conditions in the following examples shall be construed as being performed according to conventional methods and conditions, or according to the product manual. The raw materials involved in the following examples are all commercially available. The devices involved in the following examples are all conventional devices in the art.

### Example 1

A three-necked flask was used. A monomer acrylamide AM (10.5 g) was dissolved in 162 g of distilled water in the three-necked flask. Acrylic acid AA (25 g) was added thereto, and the resulting mixture was stirred for later use. 8.1 g of sodium hydroxide was weighed and dissolved in 30 g of water, obtaining an alkali solution. The alkali solution was added to the above mixture of acrylamide and acrylic acid, to adjust a pH value thereof to 7-8. N-vinylpyrrolidone (14.2 g) and Sodium undecylenate (1.6 g) were added thereto, and the resulting mixture was stirred for 5 min. The temperature of the resulting mixture was raised to 40 °C and nitrogen was introduced thereto to remove oxygen dissolved in the solution. The introduction of nitrogen was maintained for 30 minutes. 2,2'-azobis[2-(2-imidazolin-2-yl)propane] dihydrochloride was dissolved in distilled water, obtaining a solution with a mass concentration of 5%. After the introduction of nitrogen for 30 minutes, 2 g of 5% 2,2'-azobis[2-(2-imidazolin-2-yl)propane] dihydrochloride solution above was added thereto. The resulting mixture underwent reaction at 40 °C for 6 hours, obtaining a jelly. The jelly was dried, obtaining a high-temperature-resistant and salt-resistant polymer.

### Example 2

A three-necked flask was used. A monomer acrylamide AM (2.5 g) was dissolved in 100 g of distilled water in the three-necked flask. Sodium 2-acrylamido-2-methylpropane sulfonate AMPS-Na (13.5 g) was added thereto, and the resulting mixture was stirred for later use. A pH value of the resulting mixture was adjusted to 7-8. N-vinyl pyrrolidone (3.5 g) and undecenamide (0.5 g) were added thereto, and the resulting mixture was stirred for 5 minutes. The temperature of the resulting mixture was raised to 40 °C, and nitrogen was introduced thereto to remove oxygen dissolved in the solution. The introduction of nitrogen was maintained for 30 minutes. 2,2'-azobis[2-(2-imidazolin-2-yl)propane] dihydrochloride was dissolved in distilled water, obtaining a 5% solution. After the introduction of nitrogen for 30 minutes, 0.7 g of 5% 2,2'-azobis[2-(2-imidazolin-2-yl)propane] dihydrochloride solution above was added thereto. The resulting mixture underwent reaction at 40°C for 10 hours, obtaining a jelly. The jelly was dried, obtaining a high-temperature-resistant and salt-resistant polymer.

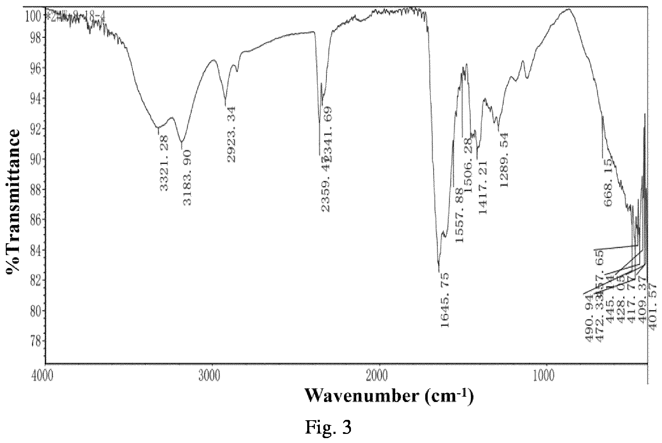

Fig. 3 shows infrared spectrum of the high-temperature-resistant and salt-resistant polymer prepared in this example. As can be seen from Fig. 3, there are characteristic absorption peaks of the amide group at 3321 cm⁻¹ and 1645 cm⁻¹, wherein peak at 3321 cm⁻¹ is attributed to the stretching vibration of the N-H bond, and peak at 1645 cm⁻¹ is attributed to the stretching vibration of the carbonyl C=O in the amide group; the peaks at 2923 cm⁻¹ and 2854 cm⁻¹ are attributed to stretching vibrations of methyl CH₃ and methylene -CH₂-, respectively; peaks near 1417 cm⁻¹ to 1506 cm⁻¹ are attributed to bending vibrations of -CH₂- and -CH₃; peak at 1289 cm⁻¹ is attributed to stretching vibration of the C-N bond; peaks at 1172 cm⁻¹ and 1061 cm⁻¹, i.e., characteristic absorption peaks of sulfonic group in AMPS, are attributed to stretching vibrations of sulfur oxygen bond S=O and S-O, respectively. The infrared spectrum analysis results indicate that the synthesized high-temperature-resistant and salt-resistant polymer contains characteristic functional groups of various monomers used for molecular structure design.

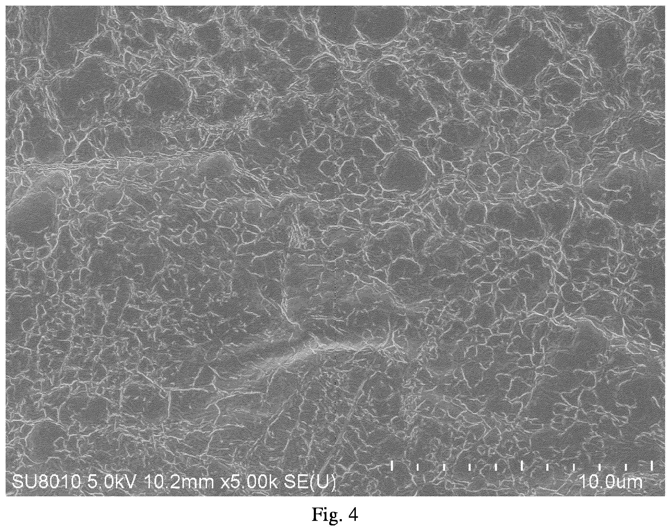

Fig. 4 shows the morphology of the high-temperature-resistant and salt-resistant polymer (with a polymer concentration of 1%) prepared in this example under 5.0kv conditions using a cold field emission scanning electron microscope SU8010. As shown in Fig. 4, the high-temperature-resistant and salt-resistant polymer prepared in this example exhibits a dense interlocking and crossing network structure, which enables the polymer to have better stability in high temperature and high salinity environments, thereby improving the stability of the polymer molecular chain in high temperature and high salinity environments, and exhibiting good high-temperature-resistance and salt-resistance at the macro level.

### Example 3

A three-necked flask was used. A monomer acrylamide AM (4 g) was dissolved in 70 g of distilled water in the three-necked flask. Acrylic acid AA (17.3 g) was added thereto. 5.6 g of sodium hydroxide was weighed and dissolved in 30 g of water, obtaining an alkali solution. The alkali solution was added to the above mixture of acrylamide and acrylic acid, to adjust a pH value thereof to 7-8. N-vinylpyrrolidone (7.8 g) and octadecyl dimethyl allyl ammonium chloride (0.2 g) were added thereto, and the resulting mixture was stirred for 5 min. The temperature of the resulting mixture was raised to 40°C and nitrogen was introduced thereto to remove oxygen dissolved in the solution. The introduction of nitrogen was maintained for 30 minutes. 2,2'-azobis[2-(2-imidazolin-2-yl)propane] dihydrochloride was dissolved in distilled water, obtaining a 5% solution. After the introduction of nitrogen for 30 minutes, 1.0 g of 5% 2,2'-azobis[2-(2-imidazolin-2-yl)propane] dihydrochloride solution above was added thereto. The resulting mixture underwent reaction at 40°C for 6 hours, obtaining a jelly. The jelly was dried, obtaining a high-temperature-resistant and salt-resistant polymer.

### Example 4

A three-necked flask was used. A monomer acrylamide AM (8.9 g) was dissolved in 100 g of distilled water in the three-necked flask. Acrylic acid AA (32.9 g) and 2-acrylamido hexadecyl sulfonic acid (0.83 g) were added thereto. 11.7 g of sodium hydroxide was weighed and dissolved in 40 g of water, obtaining an alkali solution. The alkali solution was added to the above mixture of acrylamide and acrylic acid, to adjust a pH value to 7-8. N-vinylpyrrolidone (7.35 g) was added thereto, and the resulting mixture was stirred for 5 min. The temperature of the resulting mixture was raised to 40°C and nitrogen was introduced thereto to remove oxygen dissolved in the solution. The introduction of nitrogen was maintained for 30 minutes. 2,2'-azobis[2-(2-imidazolin-2-yl)propane] dihydrochloride was dissolved in distilled water, obtaining a 5% solution. After the introduction of nitrogen for 30 minutes, 1.0 g of 5% 2,2'-azobis[2-(2-imidazolin-2-yl)propane] dihydrochloride solution above was added thereto. The resulting mixture underwent reaction at 40°C for 6 hours, obtaining a jelly. The jelly was dried, obtaining a high-temperature-resistant and salt-resistant polymer.

### Example 5

A three-necked flask was used. A monomer acrylamide AM (8.3 g) was dissolved in 140 g of distilled water in the three-necked flask. Sodium 2-acrylamido-2-methylpropane sulfonate AMPS-Na (30.9 g) was added thereto. They were mixed by stirring and a pH value of the resulting mixture was adjusted to 7-8. N-vinylpyrrolidone (5.5 g) and divinylbenzene (0.3 g) were added thereto, and the resulting mixture was stirred for 5 min. The temperature of the resulting mixture was raised to 40°C and nitrogen was introduced thereto to remove oxygen dissolved in the solution. The introduction of nitrogen was maintained for 30 minutes. 2,2'-azobis[2-(2-imidazolin-2-yl)propane] dihydrochloride was dissolved in distilled water, obtaining a 5% solution. After the introduction of nitrogen for 30 minutes, 1.5 g of 5% 2,2'-azobis[2-(2-imidazolin-2-yl)propane] dihydrochloride solution above was added thereto. The resulting mixture underwent reaction at 40°C for 6 hours, obtaining a jelly. The jelly was dried, obtaining a high-temperature-resistant and salt-resistant polymer.

### Comparative Example 1

A three-necked flask was used. A monomer acrylamide AM (0.72 g) was dissolved in 110 g of distilled water in the three-necked flask. Sodium 2-acrylamido-2-methylpropane sulfonate AMPS-Na (33.4 g) and N-vinylpyrrolidone (4.9 g) were added thereto. A pH value of the resulting mixture was adjusted to 7-8, and octadecyl dimethyl allyl ammonium chloride (0.07 g) was then added thereto. The resulting mixture was stirred for 5 min. The temperature of the resulting mixture was raised to 40°C and nitrogen was introduced thereto to remove oxygen dissolved in the solution. The introduction of nitrogen was maintained for 30 minutes. 2,2'-azobis[2-(2-imidazolin-2-yl)propane] dihydrochloride was dissolved in distilled water, obtaining a 5% solution. After the introduction of nitrogen for 30 minutes, 0.7 g of 5% 2,2'-azobis[2-(2-imidazolin-2-yl)propane] dihydrochloride solution above was added thereto. The resulting mixture underwent reaction at 40°C for 6 hours, obtaining a jelly. The jelly was dried, obtaining a high-temperature-resistant and salt-resistant polymer.

### Comparative Example 2

A three-necked flask was used. A monomer acrylamide AM (1.2 g) was dissolved in 136 g of distilled water in the three-necked flask. Sodium 2-acrylamido-2-methylpropane sulfonate AMPS-Na (48.8 g), acrylic acid AA (6.2 g), and N-vinylpyrrolidone (8.2 g) were added thereto. A pH value of the resulting mixture was adjusted to 7-8, the temperature of the resulting mixture was then raised to 40°C, and nitrogen was introduced thereto to remove oxygen dissolved in the solution. The introduction of nitrogen was maintained for 30 minutes. 2,2'-azobis[2-(2-imidazolin-2-yl)propane] dihydrochloride was dissolved in distilled water, obtaining a 5% solution. After the introduction of nitrogen for 30 minutes, 1.0 g of 5% 2,2'-azobis[2-(2-imidazolin-2-yl)propane] dihydrochloride solution above was added thereto. The resulting mixture underwent reaction at 40°C for 6 hours, obtaining a jelly. The jelly was dried, obtaining a high-temperature-resistant and salt-resistant polymer.

### Performance evaluation

### 1. Evaluation method

The rheological properties of high-temperature-resistant and salt-resistant polymers prepared in various examples and comparative examples were evaluated according to the following evaluation method:
(1) 350 mL of simulated seawater was placed in a slurry cup. 0.35 g (to the nearest 0.01 g) of sodium hydroxide and 0.70 g of sodium carbonate was added thereto, and the resulting mixture was stirred at a rotation speed of 11,000 r/min for 5 minutes.
(2) 7.0 g samples of the above examples and comparative examples were taken, and slowly added to the slurry cup while stirring at a rotation speed of 8,000 r/min; after the addition was completed, the resulting mixture was stirred at a rotation speed of 11,000 r/min for 30 min.
(3) 205.00 g of potassium formate (to the nearest 0.01 g) and 1 g of a defoamer were added to the slurry cup. The resulting mixture was stirred at a rotation speed of 11,000 r/min for 20 minutes.
(4) The above slurries were aged at 65°C for 16 hours. Readings of the slurries to be tested were measured at 600 r/min, 300 r/min, 6 r/min, and 3 r/min at 49°C according to GB/T 16783.1; and apparent viscosity AV, plastic viscosity PV, yield point YP, and yield-point-to-plastic-viscosity-ratio YP/PV thereof were calculated respectively.
(5) The slurries to be tested were loaded into an aging tank. 1 g of a deoxidizer was added thereto, and dissolved by stirring. The aging tank was then charged with 450 psi nitrogen gas and sealed. After passing the leak detection, the aging tank was placed in a roller oven at 210°C and rolled for 16 hours.
(6) The aging tank was taken out, and cooled to room temperature. The aging tank was then opened, and contents therein were poured into stirring cups at a high stirring speed respectively, and the contents were stirred at a rotation speed of 11,000 r/min for 5 minutes. Readings of the slurries to be tested after rolling were measured at 600 r/min, 300 r/min, 6 r/min, and 3 r/min at room temperature and 49°C according to GB/T 16783.1, respectively; and apparent viscosity, yield point, and yield-point-to-plastic-viscosity-ratio thereof were calculated, respectively.

### 2. Evaluation results

The rheological performance results of each example are shown in Table 1.

**Table 1**

| | | | | | | | | | | |
|---|---|---|---|---|---|---|---|---|---|---|
| Temperature/ °C | **210 °C** | | | | | | | | | |
| Density/g/cm³ | **1.3** | | | | | | | | | |
| Polymer/ g | 7.00 (**Example 1**) | | 7.00 (**Example 2**) | | 7.00 (**Example 3**) | | 7.00 (**Example 4**) | | 7.00 (**Example 5**) | |
| Potassium formate/ g | 205.0 | | 205.0 | | 205.0 | | 205.0 | | 205.0 | |
| Sodium hydroxide | 0.58 | | 0.58 | | 0.58 | | 0.58 | | 0.58 | |
| Sodium carbonate/g | 0.70 | | 0.70 | | 0.70 | | 0.70 | | 0.70 | |
| Deoxidizer/g | 1.00 | | 1.00 | | 1.00 | | 1.00 | | 1.00 | |
| Defoamer/mL | 3.00 | | 3.00 | | 3.00 | | 3.00 | | 3.00 | |

| Test temperature | **Before hot rolling** | **After hot rolling** | **Before hot rolling** | **After hot rolling** | **Before hot rolling** | **After hot rolling** | **Before hot rolling** | **After hot rolling** | **Before hot rolling** | **After hot rolling** |
|---|---|---|---|---|---|---|---|---|---|---|
| | **49 °C** | **49 °C** | **49 °C** | **49 °C** | **49 °C** | **49 °C** | **49 °C** | **49 °C** | **49 °C** | **49 °C** |
| Φ600 | 96.0 | 88.0 | 93.0 | 81.0 | 83.0 | 53.0 | 130.0 | 64.0 | 84.0 | 80.0 |
| Φ300 | 61.0 | 54.0 | 58.0 | 50.0 | 55.0 | 31.0 | 85.0 | 36.0 | 54.0 | 50.0 |
| Φ200 | 47.0 | 4.0 | 43.0 | 37.0 | 42.0 | 22.0 | 67.0 | 24.5 | 40.5 | 37.0 |
| Φ100 | 29.0 | 23.0 | 25.0 | 21.0 | 26.0 | 12.0 | 42.5 | 14.0 | 23.5 | 22.0 |
| Φ6 | 3.0 | 2.0 | 3.0 | 1.5 | 3.0 | 1.0 | 5.5 | 2.5 | 2.5 | 2.0 |
| Φ3 | 1.5 | 1.0 | 1.5 | 1.0 | 2.0 | 0.5 | 3.0 | 0.5 | 1.5 | 1.0 |
| AV/(mPa·s) | 48 | 44 | 47 | 41 | 42 | 27 | 65 | 32 | 42 | 40 |
| PV/(mPa·s) | 35 | 34 | 35 | 31 | 28 | 22 | 45 | 28 | 30 | 30 |
| YP/Pa | 13 | 10 | 12 | 10 | 14 | 5 | 20 | 4 | 12 | 10 |
| YP/PV | 0.38 | 0.30 | 0.34 | 0.31 | 0.49 | 0.21 | 0.45 | 0.15 | 0.41 | 0.34 |

The rheological performance results of each comparative example are shown in Table 2.

**Table 2**

| | | | | |
|---|---|---|---|---|
| Temperature/ °C | **210 °C** | | | |
| Density/g/cm³ | **1.3** | | | |
| Polymer/g | **7.00 (Comparative Example 1)** | | **7.00 (Comparative Example 2)** | |
| Potassium formate/g | 205.0 | | 205.0 | |
| Sodium hydroxide | 0.58 | | 0.58 | |
| Sodium carbonate/g | 0.70 | | 0.70 | |
| Deoxidizer/g | 1.00 | | 1.00 | |
| Defoamer/mL | 3.00 | | 3.00 | |

| Test temperature | **Before hot rolling** | **After hot rolling** | **Before hot rolling** | **After hot rolling** |
|---|---|---|---|---|
| | **49 °C** | **49 °C** | **49 °C** | **49 °C** |
| Φ600 | 76.0 | 36.0 | 35.0 | 26.0 |
| Φ300 | 44.0 | 19.0 | 20.0 | 14.0 |
| Φ200 | 31.0 | 13.0 | 14.0 | 10.0 |
| Φ100 | 17.0 | 7.0 | 9.0 | 6.0 |
| Φ6 | 1.5 | 1.0 | 2.0 | 1.5 |
| Φ3 | 1.0 | 1.0 | 1.5 | 1.0 |
| AV/(mPa·s) | 38 | 18 | 18 | 13 |
| PV/(mPa·s) | 32 | 17 | 15 | 12 |
| YP/Pa | 6 | 1 | 3 | 1 |
| YP/PV | 0.19 | 0.06 | 0.17 | 0.09 |

As can be seen from Table 1, in a system of potassium formate salt solution in water with a density of 1.3 g/cm³, after 16 hours of hot rolling at 210°C, the rheological performance of the polymer samples prepared in the above examples decreased slightly. Among them, the polymer samples obtained in Examples 1, 2, and 5 exhibit better rheological performance, with an apparent viscosity (AV) after rolling > 40, a plastic viscosity value (PV) > 30, and a yield point (YP) > 10, yield-point-to-plastic-viscosity-ratio (YP/PV) > 0.3. The evaluation data for Comparative Example 1 and Comparative Example 2 are shown in Table 2. After 16 hours of hot rolling at 210°C, the rheological performance of the polymer samples obtained from the above comparative examples is significantly decreased.

3. The performance of the high-temperature-resistant and salt-resistant polymer prepared in Example 2 was tested in a potassium formate system with a density of 1.4 g/cm³. The amount of high-temperature-resistant and salt-resistant polymer used was 2.5%. The results are shown in Table 3.

**Table 3**

| | | |
|---|---|---|
| Temperature/ °C | **210 °C** | |
| Density/g/cm³ | **1.4** | |
| Polymer/g | **8.75 (Example 2)** | |
| Potassium formate/g | 279 | |
| Sodium hydroxide | 0.58 | |
| Sodium carbonate/g | 0.70 | |
| Deoxidizer/g | 1.00 | |
| Defoamer/mL | 2.00 | |

| Test temperature | **Before hot rolling** | **After hot rolling** |
|---|---|---|
| | **49 °C** | **49 °C** |
| Φ600 | 86.00 | 122 |
| Φ300 | 48.00 | 70 |
| Φ200 | 32.00 | 50 |
| Φ100 | 17.00 | 28 |
| Φ6 | 1.00 | 2.0 |
| Φ3 | 0.00 | 0.0 |
| AV/(mPa·s) | 43.00 | 61 |
| PV/(mPa·s) | 38.00 | 52 |
| YP/Pa | 5.00 | 9 |
| YP/PV | 0.13 | 0.17 |

As can be seen from the data in Table 3, under higher density conditions of potassium formate salt solution in water, the high-temperature-resistant and salt-resistant polymer after hot rolling at 210°C could still maintain high YP and PV values, indicating that the polymer could exhibit salt-resistance at 1.4 g/cm³ (potassium formate salt solution in water).

4. dynamic rheological performance test of the high-temperature-resistant and salt-resistant polymer prepared in Example 2

The dynamic rheological performance of a polymer solution with a mass concentration of 2% was tested using an AntonPaar-MCR102 rheometer. Firstly, the heating program (10°C/10min) was set, and 30 mL of the polymer solution was then added into a rotating cup, and the cup cover thereof was sealed; nitrogen was introduced through a connector at a pressure of 200psi. Finally, the program was started to start the test, and the dynamic rheological performance of ordinary high-temperature-resistant polymer (partially hydrolyzed polyacrylamide, HPAM, with a molecular weight of 16 million) and the high-temperature-resistant and salt-resistant polymer in Example 2 were compared at shear rates ranging from 1000 S⁻¹ to 5 S⁻¹ at temperatures ranging from 120°C to 180°C.

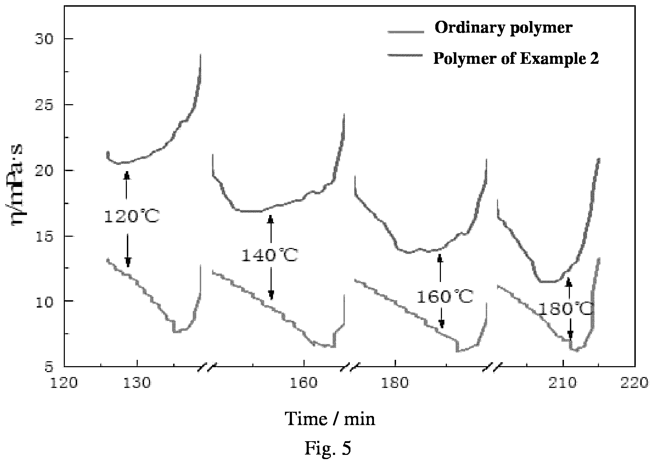

The test results are shown in Fig. 5, in which, the curves in a lower part represent ordinary high-temperature-resistant polymer, and the curves in an upper part represent high-temperature-resistant and salt-resistant polymer in Example 2.

As can be seen from Fig. 5, as the temperature increases, the viscosity of both the ordinary high-temperature-resistant polymer and the high-temperature-resistant and salt-resistant polymer in Example 2 shows a decreasing trend. However, the viscosity of the high-temperature-resistant and salt-resistant polymer in Example 2 is higher than that of the ordinary high-temperature-resistant polymer. At 180°C, the viscosity of the high-temperature-resistant and salt-resistant polymer in Example 2 is still greater than 10 mPa·s at various shear rates, while the viscosity of the ordinary high-temperature-resistant polymer is lower than 10 mPa·s. It indicates that the high-temperature-resistant and salt-resistant polymer of the present application has good high-temperature-resistance. At a specific temperature, as the shear rate changes from high to low, the viscosity of ordinary high-temperature-resistant polymer continuously decreases, exhibiting typical pseudoplastic fluid characteristics. However, the high-temperature-resistant and salt-resistant polymer of the present application could maintain a certain viscosity at a high shear rate, and still has a high viscosity at low shear rates. These characteristics could allow for a good ability of the drilling fluid system to carry drilling cuttings under low shear conditions. It indicates that the high-temperature-resistant and salt-resistant polymer of the present application could maintain the rheological performance of the drilling fluid system at different shear rates.

The above examples are preferred embodiments of the present application, but they are not limited to the above examples. Any other substitutions, modifications, combinations, changes, simplifications, etc. that do not deviate from the spirit and principles of the present application should be equivalent substitutions and fall within in the scope of the present application.

## Claims

1. A rheology modifier for a water-based drilling fluid, wherein the rheology modifier is prepared by polymerization reaction of raw materials including 10 wt%-40 wt% of a first monomer, 40 wt%-70 wt% of a second monomer, 10 wt%-40 wt% of a third monomer, and 0.5 wt%-3 wt% of a fourth monomer,
the first monomer is any selected from a group consisting of acrylamide, methylacrylamide, N-ethylacrylamide, and N,N-dimethylacrylamide;
the second monomer is any selected from a group consisting of acrylic acid, methacrylic acid, sodium 2-acrylamido-2-methylpropane sulfonate, vinylsulfonic acid, and p-vinylbenzene sulfonic acid;
the third monomer is any selected from a group consisting of N-vinyl pyrrolidone, N-vinylcaprolactam, and vinylacetic acid; and
the fourth monomer is any selected from a group consisting of octadecyl dimethyl allyl ammonium chloride, tetradecyl dimethyl allyl ammonium chloride, dodecyl dimethyl allyl ammonium chloride, tetradecyl methacrylate, hexadecyl methacrylate, octadecyl methacrylate, divinylbenzene, 2-acrylamido tetradecyl sulfonic acid, 2-acrylamido hexadecyl sulfonic acid, 2-acrylamido octadecyl sulfonic acid, dodecyl vinyl ether, hexadecyl vinyl ether, vinyl triethoxysilane, vinyl triisopropoxysilane, 1-undecenamide, sodium undecylenateundecenate, and 1-undecenoic acid.

2. The rheology modifier for the water-based drilling fluid as claimed in claim 1, wherein the first monomer is acrylamide.

3. The rheology modifier for the water-based drilling fluid as claimed in claim 1, wherein the second monomer is acrylic acid or sodium 2-acrylamido-2-methylpropane sulfonate.

4. The rheology modifier for the water-based drilling fluid as claimed in claim 1, wherein the third monomer is N-vinylpyrrolidone.

5. The rheology modifier for the water-based drilling fluid as claimed in claim 1, wherein the fourth monomer is any selected from a group consisting of sodium undecylenate, 1-undecenamide, octadecyl dimethyl allyl ammonium chloride, 2-acrylamido hexadecyl sulfonic acid, and divinylbenzene.

6. A method for preparing the rheology modifier for the water-based drilling fluid as claimed in any one of claims 1 to 5, comprising
step (1), adding deionized water to a reaction vessel, adding the first monomer and the second monomer in sequence thereto, adjusting a pH value of a resulting mixture to 7-8, and then adding the third monomer and the fourth monomer in sequence thereto, to obtain a reaction system;
step (2), raising a temperature of the reaction system, introducing nitrogen gas into the reaction vessel, then adding an initiator to the reaction system, and subjecting a resulting mixture to reaction, to obtain a jelly; and
step (3), drying and pulverizing the jelly.

7. The method as claimed in claim 6, wherein in step (1), a sum of masses of the first monomer, the second monomer, the third monomer, and the fourth monomer accounts for 17% to 25% of a mass of the reaction system.

8. The method as claimed in claim 6, wherein in step (2), the temperature of the reaction system is raised to 30°C-40°C, nitrogen is introduced into the reaction vessel, and the initiator is then added to the reaction system.

9. The method as claimed in claim 6, wherein in step (2), the initiator is an azo initiator, preferably 2,2'-azobis[2-(2-imidazolin-2-yl)propane] dihydrochloride, or 2,2'-azobis(2-methylpropionamidine) dihydrochloride.

10. The method as claimed in claim 6, wherein in step (2), the initiator is added in an amount of 0.05% to 0.3% of the sum of the masses of the first monomer, the second monomer, the third monomer, and the fourth monomer.
